(19)

Europäisches
Patentamt
European
Patent Office
Office européen
des brevets

(11) **EP 4 650 864 A1**

(12) **EUROPEAN PATENT APPLICATION**

(43) Date of publication:
**19.11.2025 Bulletin 2025/47**

(21) Application number: **24176052.9**

(22) Date of filing: **15.05.2024**

(51) International Patent Classification (IPC):
**G02F 1/225** *(2006.01)*   **G02F 1/035** *(2006.01)*
**G02F 1/35** *(2006.01)*

(52) Cooperative Patent Classification (CPC):
**G02F 1/035; G02F 1/225; G02F 1/3511;**
**G02F 1/3515;** G02F 2203/15

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Imec VZW**
**3001 Leuven (BE)**

• **Katholieke Universiteit Leuven**
**KU Leuven Research & Development**
**3000 Leuven (BE)**

(72) Inventors:
• **SHARIF AZADEH, Mohammad Saeed**
**3001 Leuven (BE)**
• **KHALIL, Ahmed**
**3000 Leuven (BE)**

(74) Representative: **AWA Sweden AB**
**Box 5117**
**200 71 Malmö (SE)**

(54) **A DEVICE AND A METHOD FOR GUIDING LASER LIGHT**

(57)     A device (100; 200; 300) for guiding laser light comprises: a waveguide (110; 210; 310) configured to propagate the laser light between a first port (102; 202; 302) and a second port (104; 204; 304); a resonator (120; 220; 320) configured to form a resonant traveling wave, RTW, to be propagated along a direction of the waveguide (110; 210; 310), wherein the RTW is configured to provide a first perturbation of the laser light propagating from the first port (102; 202; 302) towards the second port (104; 204; 304) and a second perturbation of oppositely directed laser light; and a differentiating element (150; 250; 350) configured to act selectively on the laser light and/or the second perturbation of the oppositely directed laser light such that the device (100; 200; 300) is configured to control a direction of light being guided by the device (100; 200; 300).

Fig. 1

EP 4 650 864 A1

## Description

Technical field

The present description relates to guiding of laser light. In particular, the present description relates to guiding of laser light which may be implemented in a miniaturized device, such as in a photonic integrated circuit.

Background

Optical systems are increasingly used in miniaturized devices. For instance, optical systems may be implemented in photonic integrated circuits. The use of miniaturized devices may have relatively low available power, as the miniaturized devices may rely on a small size battery with limited power, such as in portable devices, robots, and electric vehicles.

Thus, it is important to provide optical systems that require low power consumption. Further, it is desired that optical systems provide well-controlled guiding of light. For instance, optical isolators controlling light to be passed only in one direction through the optical isolator may be advantageously used in various applications, such as to ensure that undesired back-reflections of light are avoided. This may be important in ensuring an efficient output of laser light from a laser. However, present integrated devices for controlling directionality of light either use magnets or require substantial amount of power.

Summary

An objective of the present description is to provide efficient control of guiding of light so as to enable guiding of light to be controlled using low power.

This and other objectives are at least partly met by the invention as defined in the independent claims. Preferred embodiments are set out in the dependent claims.

According to a first aspect, there is provided a device for guiding laser light, said device comprising: a waveguide configured to propagate the laser light between a first port and a second port; a resonator configured to form a resonant traveling wave (RTW) to be propagated along a direction of the waveguide, wherein the RTW is configured to affect propagation of the laser light in the waveguide, wherein the resonator is configured to provide a first perturbation of the laser light propagating from the first port towards the second port and to provide a second perturbation of oppositely directed laser light propagating from the second port towards the first port, wherein the first perturbation is different from the second perturbation; and a differentiating element configured to act selectively on the laser light and/or the second perturbation of the oppositely directed laser light such that the device is configured to control a direction of light being guided by the device.

The device provides a resonator that forms a RTW that propagates along a direction of the waveguide. The resonator may be configured to build up power within the resonator, such that the RTW may be provided using a small amount of power while providing a strong wave for interaction with the laser light propagating in the waveguide. Thus, a resonator configured to form the RTW may be utilized for providing an efficient manner of generating a wave for affecting propagation of light in a waveguide.

The resonator may be arranged in relation to the waveguide such that, at least in a part of the resonator, the RTW will propagate along a direction of the waveguide. It is an insight of the present description that the RTW may provide different effects on light depending on a direction of propagation of light in the waveguide, since a relation of the RTW and a light wave of laser light is different depending on whether the resonant traveling wave and the light wave travel in a same direction or in opposite directions. Thus, the device may provide a non-reciprocal effect on laser light guided by the waveguide.

The resonator and the waveguide may thus ensure that the laser light propagating from a first port towards a second port of the waveguide is affected in a different manner to oppositely directed laser light propagating from the second port towards the first port. The device further comprises a differentiating element which acts selectively on the laser light and/or the second perturbation of the oppositely directed laser light. The differentiating element may thus enhance an effect of the difference in perturbations provided by the RTW affecting light in the waveguide.

The differentiating element may be configured to provide an effect on light that is adapted to characteristics of oppositely directed light being subject to the second perturbation. For instance, the differentiating element may be configured to selectively only couple the laser light in a forward direction between the first port and the waveguide, to selectively quench the oppositely directed light or to selectively control the oppositely directed light to be diverted into a direction different from a direction from which the laser light is received.

The differentiating element may thus enhance a difference in effect provided by the device on laser light propagating from the first port towards the second port and on oppositely directed laser light propagating from the second port towards the first port. The differentiating element may selectively act on the laser light or on the oppositely directed light. Alternatively, the differentiating element may provide a different effect on the laser light and the oppositely directed light based on the laser light and the oppositely directed light having different characteristics.

Characteristics of laser light and oppositely directed laser light propagated in the waveguide may include at least amplitude, phase, wavelength, polarization, and propagation mode. The first and the second perturbations may affect one or more of the characteristics during propagation of light in the waveguide and/or may generate further characteristics, such as generating light at harmonic frequencies. Since the first and second perturbations are different, characteristics of the first perturbation of laser light may be adapted to desired characteristics to be output at a second end of the waveguide at the second port, whereas the second perturbation of oppositely directed laser light may be adapted for controlling output, if any, at a first end of the waveguide at the first port. This may be utilized by the differentiating element for ensuring that the different effect on laser light and oppositely directed laser is provided.

According to an embodiment, the device may be used for providing an optical isolator in that oppositely directed light is quenched or prevented from passing back to the first port and only the laser light propagating in a forward direction from the first port to the second port is allowed to pass through the device.

According to another embodiment, the device may be used for providing an optical circulator in that laser light input at the first port may be output at the second port, whereas oppositely directed laser light input at the second port may be controlled to be output at a third port instead of going back to the first port.

As used herein, the term "waveguide" should be construed as any structure providing guiding of light. The waveguide may extend at least between the first port and the second port. The waveguide may be configured to confine light in a cross-section perpendicular to an extension of the waveguide between the first port and the second port. The waveguide may thus be configured restrict light to follow a path between the first port and the second port, whereby transmission of light with low loss may be provided. The waveguide may for instance guide light by light being reflected on inner walls of the waveguide by total internal reflection or by a reflective coating being provided on the walls of the waveguide.

The waveguide may for instance be formed on a substrate. Thus, the waveguide may extend in a layer on the substrate and may define the path of light within the layer.

The waveguide may extend along a straight path between the first port and the second port. However, it should be realized that the waveguide may alternatively define a non-straight path. It should further be realized that the waveguide may define a loop, wherein the first and second ports may be arranged at different locations in relation to the loop. In such case, the waveguide may be configured to propagate the laser light along one direction in the loop, such as in a clockwise direction, and the oppositely directed laser light along a counter-direction in the loop.

By laser light is here meant coherent light having a particular wavelength. The laser light may relate to light in a visible range, but it should be realized that laser light may alternatively be ultra-violet light or infra-red light. It should further be realized that the device may be configured at different points in time to guide laser light of different wavelengths.

The oppositely directed laser light may be related to the laser light. For instance, the oppositely directed laser light may be formed by a reflection of the laser light causing the oppositely directed laser light to be propagated in the opposite direction from the second port towards the first port in the waveguide. However, it should be realized that the oppositely directed laser light may alternatively be separately generated from the laser light.

The device may be configured to guide multiple distinct wavelengths of laser light simultaneously. In such case, the device may comprise a plurality of differentiating elements and/or the differentiating element may be configured to selectively act on the laser light and/or the second perturbation of the oppositely directed laser light for the multiple distinct wavelengths. The different wavelengths of the laser light may need to be spectrally separated. For instance, if the second perturbation of oppositely directed laser light causes frequency (wavelength) of the light to change, the oppositely directed laser light relating to laser light of a first wavelength should not be changed to a changed wavelength that interferes with laser light of a second wavelength.

Herein, reference may be made to a frequency of light, in particular in relation to causing a change in frequency due to a frequency of the RTW. However, it should be realized that the frequency of light has a corresponding wavelength and, when referring to a characteristic of light, the terms frequency and wavelength may be used interchangeably.

The waveguide is configured to propagate the laser light between the first port and the second port. The first port and the second port, respectively, may define locations at which light may be coupled into and out of the waveguide. The first port and the second port may not necessarily be directly connected to the waveguide. Rather, one or more optical elements may be provided between the first port and the waveguide and between the second port and the waveguide, respectively. However, light may be passed from the first port to the waveguide and from the waveguide to the second port.

In addition, light propagation from the first port towards the second port defines a direction of light propagation in the waveguide although light may not necessarily reach the second port. For instance, the light may be diverted or quenched by an element arranged between the waveguide and the second port. The light may also reach the second port in an altered form, such as being altered in terms of amplitude, phase and/or polarization. Similarly, light propagation from the second port towards the first port defines an opposite direction of light propagation in the waveguide although light may not necessarily reach the first port.

The resonator may be any unit or structure, wherein a resonance is defined for forming a RTW. The resonator may provide energy in a wave at a coupling region in relation to a loop of the resonator for forming a traveling wave in the loop. The traveling wave travels through the loop and may be in phase with the wave at the coupling region for enhancing the traveling wave. This condition occurs at specific frequencies where the length of the resonator is a multiple of wavelength of the RTW inside the resonator. In this manner, the traveling wave may be strengthened multiple times by traveling multiple times through the loop, so as to form the resonant traveling wave. The RTW is used to manipulate the light in the waveguide, and for this action to be efficient, the phase velocity of the RTW should be equal to the group velocity of light in the waveguide.

The resonator is configured to propagate the RTW along a direction of the waveguide. This implies that the resonator may comprise a structure in which propagation of the RTW is defined. As mentioned above, the RTW may be propagated in a loop or in relation to a structure forming a loop. The waveguide and the resonator may be arranged such that the loop or structure for forming the RTW may be close to each other and extend along a common direction. For instance, at least part of a loop of the resonator may extend along a portion of the waveguide between the first port and the second port.

The structure of the resonator defining propagation of the RTW and at least part of the waveguide may be arranged side-by-side in a common layer and/or may be arranged in different layers. For instance, the waveguide and the resonator may be formed on a common substrate and the structure of the resonator may be arranged in a layer above the waveguide, such that the waveguide is between the substrate and the structure of the resonator. The arrangement of the resonator and the waveguide in layers may be particularly suited for an integrated device, such as a device including a photonic integrated circuit. However, it should be realized that neither the resonator nor the waveguide need to be restricted to a single layer.

For instance, the resonator may be configured to generate a RTW which may define an electric, magnetic, electro-magnetic or an acoustic wave that extends externally to the structure. The RTW may thus provide a wave that extends into the waveguide, such that the propagation of light in the waveguide is affected by the RTW.

The resonator may be configured to generate a radio frequency wave. The resonator may be configured to generate an electro-magnetic wave having a radio frequency. This may be suitable for providing a RTW using a low power consumption while providing efficient manipulation of light propagating in the waveguide. However, it should be realized that the resonator may be configured in other ways, such as for generating an acoustic wave.

The RTW may be configured to interfere with light propagating in the waveguide and/or to affect properties of the waveguide so as to affect propagation of the laser light in the waveguide. The RTW may be configured to cause a perturbation of light propagating in the waveguide. The perturbation may affect one or more characteristics of light propagating in the waveguide, such as amplitude, phase, wavelength, polarization, and/or propagation mode of light.

The perturbation of light propagating in the waveguide via the RTW may be mediated by electro-optic effect, or an acousto-optic effect, or non-linear interactions, or by carrier injection/depletion in the waveguide provided by the RTW.

The first perturbation is different from the second perturbation. This may imply that the first perturbation and the second perturbation affect different characteristics of light. Alternatively, or additionally, the first perturbation and the second perturbation may provide different magnitudes or effects in affecting a same characteristic of light. Thanks to the first perturbation being different from the second perturbation, the RTW affects propagation of light in the waveguide to break reciprocity of propagation of laser light and oppositely directed laser light in the waveguide.

The laser light having been subject to the first perturbation is referred to herein as "the first perturbation of laser light", whereas the oppositely directed laser light having been subject to the second perturbation is referred to herein as "the second perturbation of oppositely directed laser light".

The RTW may be configured to affect light propagating over a length of the waveguide. Thus, the RTW may provide an effect over a length causing an overall perturbation based on a combined effect while light propagates through the length of the waveguide. Thus, the first perturbation and the second perturbation, respectively, may relate to an overall perturbation while light propagates through the length of the waveguide affected by the RTW. It should thus also be realized that the first perturbation or the second perturbation may correspond to a zero net effect on the light propagating through the waveguide. For instance, the RTW may be configured to affect phase of light but perturbed laser light having passed the length of the waveguide may be in phase with unperturbed laser light such that a zero net effect is provided.

The RTW may be configured to propagate along a direction of the waveguide that extends from the first port towards the second port. Thus, the RTW may be provided in co-propagating direction with the laser light and hence in a counter-propagating direction with the oppositely directed laser light. However, the RTW may alternatively be configured to propagate along a direction of the waveguide that extends from the second port towards the first port. Thus, the RTW may be provided in counter-propagating direction with the laser light and hence in a co-propagating direction with the oppositely directed laser light.

The differentiating element is configured to differentiate between an unperturbed laser light, and a light perturbed by RTW. Thus, the differentiating element can act selectively based on the light characteristics formed by the second perturbation of the oppositely directed laser light which may differ from the light characteristics of the laser light and/or the first perturbation of laser light.

The differentiating element may be a passive optical component. This implies that the differentiating element may be provided in a simple manner without requiring control signals for controlling an action of the differentiating element. It should be further realized that the differentiating element may comprise a plurality of optical components that together act selectively on the laser light and/or the second perturbation of the oppositely directed laser light.

The differentiating element may comprise a component arranged in relation to the waveguide so as to be configured to receive light having propagated through the waveguide or to affect light that is thereafter propagating in the waveguide. The differentiating element may be arranged between the first port and the waveguide and/or between the second port and the waveguide.

The differentiating element may provide a selective effect on the second perturbation of the oppositely directed laser light such that the device provides control of direction of light being guided. This implies that the differentiating element may be configured to control a path of light propagating in a forward direction from the first port towards the second port and/or a path of light propagating in an opposite direction from the second port towards the first port.

For instance, the differentiating element may be configured to quench the oppositely directed laser light such that an optical isolator is provided and the device only guides light propagating from the first port towards the second port. Alternatively, the differentiating element may be configured to control a path taken by oppositely directed laser light leaving the waveguide at a first end and control a path taken by laser light leaving the waveguide at a second end. This may be used for providing an optical circulator.

The device may be used in various applications, wherein guiding of laser light is needed. For instance, the device may be used for controlling output of laser light from a laser source, wherein the device may ensure that back-reflections do not reach the laser source. This may be advantageous in ensuring efficient output of laser light and providing a well-defined wavelength of the laser light.

The device may also be used for guiding an optical signal in an optical system. For instance, the device may be used for controlling light from a light source to be output towards a target and for controlling light received back from the target to be directed to a sensor. In such case, the device may be used as an optical circulator and may be implemented in an application for ranging or remote analysis of a target.

According to an embodiment, the RTW is configured to cause a first phase shift of the laser light propagating from the first port towards the second port and a second phase shift of the oppositely directed laser light. The first phase shift may be different from the second phase shift.

The first phase shift of laser light may be provided by the RTW being configured to counter-propagate with the laser light. The second phase shift of laser light may be provided by the RTW being configured to co-propagate with the oppositely directed laser light. Since the propagation of the RTW has different relations to the laser light and the oppositely directed laser light, different phase shifts may be provided.

In other words, the resonator may be configured to modulate light causing a first phase shift of the laser light and causing a second phase shift of the oppositely directed laser light. This may further imply that differing characteristics of the first perturbation of the laser light and the second perturbation of the oppositely directed laser light may be generated. Thus, the first perturbation of the laser light may be adapted to achieve characteristics desired to be output at the second port, whereas the second perturbation of the oppositely directed laser light may be adapted to characteristics for a desired effect of the oppositely directed laser light. This may be utilized by the differential element for providing different actions on the laser light and the second perturbation of the oppositely directed laser light.

According to an embodiment, the device is configured to control the second phase shift of the oppositely directed laser light to match a zero order Bessel function having a value of zero.

Diffraction of light based on interference by the RTW may be expressed by Bessel functions defining efficiency at different orders of diffraction. Thus, a zero order Bessel function defines efficiency of diffraction at the frequency (wavelength) of oppositely directed laser light being received at the second port, whereas higher order Bessel functions define efficiency of diffraction at harmonic frequency, wherein the frequency is changed by a multiple of a frequency of the RTW.

When the zero order Bessel function has a value of zero for the second perturbation of the oppositely directed laser light, light at a laser wavelength is completely quenched. Rather, the second perturbation of the oppositely directed laser light only comprises higher order diffraction at harmonic frequencies and, hence, at different wavelengths of light.

Thus, thanks to the device being configured to match the second phase shift to a zero point of the zero order Bessel function, the oppositely directed laser light may be shifted in frequency such that intensity at the frequency (wavelength) of the laser light is reduced or completely quenched. This implies that the oppositely directed laser light may be easily separated from the laser light.

It should be realized that the second phase shift matching the zero order Bessel function having a value of zero implies that the second phase shift is exactly equal to the phase shift at which the zero order Bessel function has a value of zero. However, the second phase shift matching the zero order Bessel function having a value of zero should be construed as the zero order Bessel function being at least close to zero for the second phase shift, such as corresponding to a diffraction efficiency of 0.05 or lower.

According to an embodiment, the differentiating element comprises a filter for reducing intensity of light of wavelengths different from a particular wavelength of the laser light.

This is a simple manner of reducing intensity of the oppositely directed laser light after being subject to the second perturbation. The filter may be configured to completely block light of wavelengths different from the particular wavelength of the laser light.

According to an embodiment, the differentiating element comprises a coupling element for coupling laser light from the first port into the waveguide. The coupling element may provide coupling of light between the waveguide and the first port, wherein the coupling is selective to a wavelength of light. Thus, the coupling element may ensure that the second perturbation of oppositely directed laser light may not be coupled back from the waveguide to the first port, due to the frequency shift provided by the second perturbation.

The differentiating element may thus ensure that the second perturbation of the oppositely directed laser light is used for preventing oppositely directed laser light to be provided back to the first port.

As discussed above, the second perturbation of the oppositely directed laser light may cause a selective frequency shift of the oppositely directed laser light. Thus, the differentiating element may selectively act on the second perturbation of the oppositely directed laser light by acting in dependence of wavelength of light. This also implies that the differentiating element may be easily implemented as a passive optical component.

The frequency shift by the second perturbation of the oppositely directed laser light may be advantageously used in an optical isolator for providing guiding of light in a forward direction from a first port towards a second port while preventing light to pass back from the second port towards the first port.

According to an embodiment, the device for guiding laser light of the first aspect is an optical isolator.

In other words, according to an embodiment, there is provided a device for guiding laser light in a direction from a first port to a second port, said device comprising: a waveguide configured to propagate the laser light between the first port and the second port; a resonator configured to form a resonant traveling wave (RTW) to be propagated along a direction of the waveguide, wherein the RTW is configured to affect propagation of the laser light in the waveguide, wherein the resonator is configured to provide a first perturbation of the laser light propagating from the first port towards the second port and to provide a second perturbation of oppositely directed laser light propagating from the second port towards the first port, wherein the first perturbation is different from the second perturbation; and a differentiating element configured to act selectively on the laser light and/or the second perturbation of the oppositely directed laser light such that the device is configured to control a direction of light being guided by the device to be exclusively guided from the first port to the second port.

Thus, even though there may be oppositely directed laser light propagating in the waveguide, the device is configured to provide a second perturbation of the oppositely directed laser light, which is utilized to ensure that the oppositely directed laser light is not coupled back into the first port.

According to an embodiment, the RTW is configured to affect a propagation mode of the laser light in the waveguide.

The propagation mode may be related to a polarization of laser light. Thus, the resonator may cause a change in polarization of the laser light. This may be utilized for providing a different effect by the differentiating element in dependence of polarization of light.

The differentiating element may comprise one or more components providing a reciprocal action on polarization of light. This may be provided by a simple optical component. Thanks to the device being configured to affect the propagation mode with different net effects provided by the first and second perturbations, the device may be configured to use the differentiating element acting in dependence of polarization of light so as to control direction of laser light being guided by the device.

According to an embodiment, the RTW is configured to change the propagation mode of the laser light from a first propagation mode at a first location to a second propagation mode at a second location and wherein the RTW is configured to maintain a second propagation mode of the oppositely directed laser light at the second location during guiding of the oppositely directed laser light towards the first location.

Thus, it should be realized that the first perturbation of the laser light may provide a net effect for changing the propagation mode from the first propagation mode to the second propagation mode, while the second perturbation of the oppositely directed laser light may provide a zero net effect for maintaining the second propagation mode of the oppositely directed laser light.

According to an embodiment, the RTW is configured to cause a perturbation of a refractive index of the waveguide such that the laser light changes from the first propagation mode to a higher order propagation mode.

The perturbation of the refractive index may be utilized for controlling the propagation mode of the laser light.

According to an embodiment, the waveguide is formed from a semiconductor-based material being asymmetrically doped. This may imply that a perturbation caused by the RTW may only affect part of a cross-section of the waveguide. Hence, there may be an overlap between the perturbation by the RTW and a higher order propagation mode, which may allow the first perturbation of the laser light by the RTW as the laser light propagates from the first port towards the second port to bring the laser light to the higher order propagation mode.

For instance, the first propagation mode may be a zero order transverse electric mode of propagation of the laser light. The RTW may be configured to affect propagation of the laser light so as to cause the propagation mode to be changed to a first order transverse electric mode of propagation.

According to an embodiment, the differentiating element comprises a polarization splitter, which is configured to control a direction of output of an input laser light in dependence of a propagation mode of the input laser light.

The laser light may be coupled into the waveguide at a first end of the waveguide. The laser light may thus be coupled into the waveguide via the differential element arranged between the first port and the waveguide, wherein the laser light coupled into the waveguide has the first propagation mode. The differential element may further receive the oppositely directed laser light from the waveguide at the first end of the waveguide. Since the device is configured to provide different effects on the propagation mode of light in dependence of a direction of light in the waveguide, the oppositely directed laser light received by the differential element has a second propagation mode different from the first propagation mode.

This may be utilized to ensure that the oppositely directed laser light is not passed by the differential element back to the first port but rather passed into another direction.

The differential element may thus be formed by a polarization splitter arranged such that input laser light from the first end of the waveguide into the polarization splitter will be split into a first arm or a second arm based on polarization.

The polarization splitter may receive the laser light having the first propagation mode from the first port in the first arm of the polarization splitter associated with the corresponding polarization. This implies that the laser light will be transmitted by the polarization splitter into the waveguide. However, since the second perturbation of oppositely directed laser light has another propagation mode than the laser light received by the polarization splitter from the first port, the polarization splitter will not direct the oppositely directed laser light back towards the first port. Instead, the polarization splitter may direct the oppositely directed laser light into the second arm of the polarization splitter.

This may be advantageously utilized for providing an optical circulator, wherein light received at the first port may be guided to the second port, whereas light received at the second port may be guided to a third port different from the first port.

According to an embodiment, the device for guiding laser light of the first aspect is an optical circulator.

In other words, according to an embodiment, there is provided a device for guiding laser light received from a first port to be output at a second port and guiding laser light received from the second port to be output at a third port, said device comprising: a waveguide configured to propagate the laser light between a first port and a second port; a resonator configured to form a resonant traveling wave (RTW) to be propagated along a direction of the waveguide, wherein the RTW is configured to affect propagation of the laser light in the waveguide, wherein the resonator is configured to provide a first perturbation of the laser light propagating from the first port towards the second port and to provide a second perturbation of oppositely directed laser light propagating from the second port towards the first port, wherein the first perturbation is different from the second perturbation; and a differentiating element arranged between the waveguide and the first and third ports, wherein the differentiating element is configured to act selectively on the laser light and the second perturbation of the oppositely directed laser light such that the device is configured to control the direction of light being guided by the device.

The differentiating element may be configured to pass the laser light from the first port to the waveguide and may further be configured to pass the second perturbation of the oppositely directed laser light from the waveguide to the third port.

According to an embodiment, the resonator is a radio frequency resonator configured to form the RTW with a radio frequency, wherein the radio frequency resonator is configured to provide electro-optic perturbation of the laser light propagating in the waveguide.

The resonator may be configured to form a radio frequency electro-magnetic RTW. This may efficiently affect the propagation of light in the waveguide for causing the first perturbation of the laser light and the second perturbation of the oppositely directed laser light.

However, it should be realized that the resonator may be configured in other ways for providing the RTW. For instance, a high quality factor optical resonator may be used, wherein the RTW may be configured to provide a non-linear effect on light propagating in the waveguide, such as wavelength summation or second harmonic generation. This may be utilized for providing a difference in the first and second perturbations.

According to an embodiment, the RTW is configured to change a refractive index of the waveguide.

For instance, the changes to the refractive index may be provided by Kerr effect, e.g., in a waveguide formed by silicon, or by Pockels effect, e.g., in a waveguide formed by lithium niobate.

This may be an efficient manner of controlling guiding of light by the device so as to ensure that optical losses of the device are small.

According to an embodiment, the radio frequency resonator comprises a resonant traveling wave transmitter, wherein the resonant traveling wave transmitter is configured to form a loop, and a transmission line arranged in relation to the resonant traveling wave transmitter for coupling a signal into the resonant traveling wave transmitter.

The transmission line may be configured couple the signal into the resonant traveling wave transmitter at a coupling region. The transmission line may extend along a portion of the loop of the resonant traveling wave transmitter. The transmission line may behave as an antenna for partially coupling the signal in the transmission line into the resonant traveling wav transmitter.

The signal in the transmission line may be configured to be in phase with a wave having traveled an integer number of times through the loop. This implies that the signal in the transmission line may enhance the wave traveling around the loop so as to form a resonant traveling wave propagating in the resonant traveling wave transmitter.

The radio frequency resonator may in this manner efficiently form a strong RTW signal. This may be advantageously used for providing guiding of laser light by the device at a low power consumption. This may be particularly useful for providing a miniaturized device, such as providing the device for guiding laser light in an integrated device, where available power may be limited.

According to an embodiment, the device is configured to control perturbation of the laser light in the waveguide by controlling a voltage of a control signal transmitted through the transmission line.

The voltage of the control signal transmitted through the transmission line may control the effect on propagation of laser light provided by the RTW. This may be a simple manner of controlling the device for guiding the laser light.

According to an embodiment, the resonator comprises a first portion and a second portion for forming the RTW between the first portion and the second portion, wherein the waveguide is arranged between the first and second portions.

Thus, the resonator may comprise two electrodes forming the first portion and the second portion, respectively. The RTW may have a maximum intensity in a location between the first and second portions. Thus, by arranging the waveguide physically between the first and second portions, the RTW may efficiently affect the propagation of light in the waveguide.

According to an embodiment, at least the waveguide and the resonator are integrated on a common substrate. This facilitates providing the device for guiding light in a miniaturized form factor.

The differentiating element may also be integrated on the common substrate.

According to a second aspect, there is provided a method for guiding laser light, said method comprising: propagating the laser light between a first port and a second port in a waveguide; forming a resonant traveling wave (RTW) propagating along a direction of the waveguide, wherein the RTW is configured to affect propagation of the laser light in the waveguide, wherein the RTW is configured to provide a first perturbation of the laser light propagating from the first port towards the second port and to provide a second perturbation of an oppositely directed laser light propagating from the second port towards the first port, wherein the first perturbation is different from the second perturbation; and selectively acting, by a differentiating element, on the laser light and/or the second perturbation of the oppositely directed laser light for controlling a direction of guiding of light.

Effects and features of the second aspect are largely analogous to those described above in connection with the first aspect. Embodiments mentioned in relation to the second aspect are largely compatible with the first aspect.

The method utilizes the RTW for providing different effects on light depending on a direction of propagation of light in the waveguide, since a relation of the RTW and a light wave of laser light is different depending on whether the resonant traveling wave and the light wave travel in a same direction or in opposite directions.

The method may thus ensure that the laser light propagating from the first port towards the second port of the waveguide is affected in a different manner to oppositely directed laser light propagating from the second port towards the first port. The method further uses a differentiating element which acts selectively on the laser light and/or the second perturbation of the oppositely directed laser light. Thus, an effect of the difference in perturbations provided by the RTW affecting light in the waveguide may be enhanced.

The method may be utilized in different applications for guiding light. For instance, the method may be used for providing directional guiding of light in that light is only allowed to be guided from the first port to the second port and not from the second port to the first port. The method may alternatively be used for providing an optical circulator such that laser light received at the first port is guided to the second port and oppositely directed laser light received at the second port is guided to a third port, different from the first port.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematical view of a device for guiding laser light according to a first embodiment.
Fig. 2 is a cross-sectional view of the device taken along line C-C in Fig. 1.
Fig. 3 is a schematical view of a different shape of a waveguide of the device of the first embodiment.

Fig. 4 is a schematical view of a device for guiding laser light according to a second embodiment, wherein the device is used as an optical isolator.

Fig. 5 is a graph illustrating modulation efficiency by a resonant traveling wave on light propagating in a waveguide of the device as represented by Bessel functions.

Fig. 6 is a schematical view of a device for guiding laser light according to a third embodiment, wherein the device is used as an optical circulator.

Fig. 7 is a schematical top view of region S in Fig. 6 indicating doping of the semiconductor-based waveguide.

Fig. 8 is a flow chart of a method according to an embodiment.

Detailed description

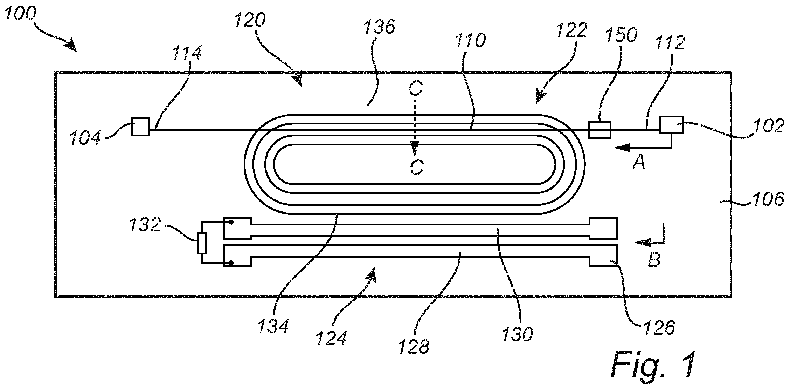

Referring now to Fig. 1, a device 100 for guiding laser light will be described. The device 100 comprises components so as to allow control of different impact by the device 100 on light propagating in different directions.

The device 100 comprises a waveguide 110 configured to propagate laser light, indicated by arrow A. The waveguide 110 is configured to receive laser light at a first location 112, which may form a first end of the waveguide 110. The device 100 may comprise a first port 102 at which laser light input to the device 100 is provided. The first port 102 is associated with the first location 112 of the waveguide 110 such that laser light input to the device 100 may be coupled into the waveguide 110 at the first location 112.

The waveguide 110 is configured to propagate the laser light input at the first location 112 to a second location 114, which may form a second end of the waveguide 110. The device 100 may further comprise a second port 104 at which the device 100 may provide output of laser light. The second port 104 is associated with the second location 114 of the waveguide 110 such that laser light at the second location 114 of the waveguide 110 may be coupled out of the waveguide 110 and provided to the second port 104.

The waveguide 110 may provide a longitudinal extension for guiding laser light along a path between the first location 112 and the second location 114. The waveguide 110 may be configured to confine the laser light in the waveguide 110. The waveguide 110 may comprise a core material which is surrounded by another medium. The refractive index of the core material may be related to the medium surrounding the core material for providing total internal reflection of the laser light in the waveguide 110. Thus, the waveguide 110 may be configured to provide guiding of light along the waveguide 110 by total internal reflection.

The waveguide 110 may be formed on a substrate 106. The waveguide 110 may form part of a photonic integrated circuit provided on the substrate 106. The core material of the waveguide 110 may be formed in a layer of the substrate 106 and may be surrounded at all sides of the waveguide 110 by a same material.

The device 100 further comprises a resonator 120. The resonator 120 is configured to form a resonant traveling wave (RTW) which is propagated along a direction of the waveguide 110, wherein the RTW affects propagation of laser light in the waveguide 110. As shown in Fig. 1, the resonator 120 may be configured to form the RTW based on an electrical signal. However, it should be realized that the resonator 120 may be implemented in other manners, so as to provide for instance an acoustic wave or an optical wave, for affecting propagation of laser light in the waveguide 110.

The resonator 120 may be a radio frequency (RF) resonator configured to form the RTW with a radio frequency. The RF resonator 120 is configured to provide electro-optic perturbation of the laser light propagating in the waveguide 110.

The RF resonator 120 comprises a transmission line 124. An electrical signal such as a RF voltage signal, indicated by arrow B, may be input to the transmission line 124 at an input 126. The transmission line 124 may comprise a ground line 128 and a signal line 130 extending in parallel, wherein the ground line 128 is connected to ground and the signal line 130 is connected to receive the input RF voltage signal. The power input to the transmission line 124 is terminated at an end opposite to the input 126 by a resistor 132.

The RF resonator 120 further comprises a RTW transmitter 122. The RTW transmitter 122 is configured to form a loop along which a RF wave may travel. The RTW transmitter 122 extends at a first coupling region 134 along an extension of the transmission line 124. The RTW transmitter 122 extends at a second coupling region 136 along an extension of the waveguide 110.

The transmission line 124 may be formed in a common plane or layer with the RTW transmitter 122. The RTW transmitter 122 may at the first coupling region 134 be arranged close to the transmission line 124.

The transmission line 124 may behave as an antenna. Thus, the RF signal input to the transmission line 124 may be partially coupled from the transmission line 124 to the RTW transmitter 122 at the first coupling region 134. The RF signal input to the transmission line 124 may be provided with a frequency such that a traveling wave in the RTW transmitter 122 having traveled through the loop is in phase with the RF signal propagating in the transmission line 124. This implies that power of the traveling wave is enhanced forming a resonant traveling wave in the RTW transmitter 122. The RTW propagates along the transmission line 124 in the first coupling region 134 defining a direction of the RTW in the RTW transmitter 122 as illustrated by arrows A in Fig. 1.

The RF resonator 120 provides resonance frequencies where a resonance condition is met as defined by $L = m\lambda/n$, where $L$ is a length of the loop of the RTW transmitter 122, m is a positive integer number, $\lambda$ is a

wavelength of the RF signal and n is a refractive index of the RTW transmitter 122.

The RF resonator 120 may be configured to provide a small RF power into the transmission line 124. The RF power then builds up inside the RTW transmitter 122 with enhancement factors up to 1000. Using the enhanced RF power, the RF resonator 120 provides the RTW in the second coupling region 136 extending along the waveguide 110. The RF resonator 120 is configured to efficiently provide a strong RTW signal based on RF power input to the transmission line 124.

As shown in Fig. 1, the RF resonator 120 may be configured to provide the RTW propagating in a direction corresponding to an extension of the waveguide 110 from the second location 114 to the first location 112. Thus, the RTW may be configured to propagate in an opposite counter-propagating direction to the laser light that is input to the device 100 at the input port 102 and propagated in the waveguide 110 towards the second port 104. This also implies that the RTW is configured to propagate in a same co-propagating direction to oppositely directed laser light propagating from the second location 114 to the first location 112 in the waveguide 110.

Depending on a desired effect of the RTW on the laser light propagated in the waveguide 110, the RTW may be configured to be counter-propagating to the laser light propagating from the first location 112 to the second location 114 or the RTW may be configured to be co-propagating to the laser light propagating from the first location 112 to the second location 114.

The RTW may be configured to affect propagation of light in the waveguide 110. The RTW formed by the resonator 120 will exhibit an electro-magnetic field around the RTW transmitter 122. The RTW may thus give rise to an electro-magnetic field in the waveguide 110 arranged close to the RTW transmitter 122, which will further affect propagation of light in the waveguide 110. Thus, electro-optic perturbation of the laser light propagating in the waveguide 110. However, if the resonator would instead be configured to output an acoustic wave, an acousto-optic perturbation of the laser light propagating in the waveguide 110. As yet another alternative, if the resonator would be configured to output an optical wave, the optical wave may cause perturbation of the laser light propagating in the waveguide 110.

The electro-magnetic field of the RTW may affect refractive index of the waveguide 110. Thus, the RTW may be configured to change the refractive index of the waveguide 110. The refractive index may thus vary in the waveguide 110 with movement of the RTW along a direction of the waveguide 110. This may cause a change of the refractive index in the waveguide 110 that varies along the direction of the waveguide 110 with the movement of the waveguide 110.

The RTW may thus cause a perturbation of the laser light and the oppositely directed laser light propagating in the waveguide 110. The change of the refractive index in the waveguide 110 may thus be co-propagating or counter-propagating with light propagating in different directions in the waveguide 110. Hence, the RTW may provide different effects depending on the RTW is co-propagating or counter-propagating with light propagation in the waveguide 110.

The RTW may thus cause a first perturbation of laser light propagating from the first location 112 to the second location 114 and a second perturbation of the oppositely directed laser light propagating from the second location 114 to the first location 112, wherein the first perturbation is different from the second perturbation.

The perturbation caused by the RTW may affect a characteristic of light. The perturbation may for instance affect at least one of amplitude, phase, wavelength, polarization, or propagation mode of the laser light and the oppositely directed laser light. The RTW may for instance be configured to provide modulation of light affecting phase and/or propagation mode of the laser light and the oppositely directed laser light.

The RTW may be configured to propagate along the direction of the waveguide 110 over an entire distance or part of a distance between the first location 112 and the second location 114. Overall perturbation of laser light and oppositely directed laser light depend on a path length in the waveguide 110 which is affected by the RTW. Thus, the first and second perturbations may be defined by the RTW and a length in which light propagation is affected. A net effect of the laser light or the oppositely directed laser light may be zero. For instance, if the RTW causes a phase shift, the perturbed laser light may be in phase with unperturbed laser light such that a zero net effect on phase is provided.

A magnitude of an effect of the RTW on the propagation of light may depend on power of the RTW. The power of the RTW may in turn be dependent on an amplitude of the RF voltage signal input to the transmission line 124. Thus, the perturbation of laser light and oppositely directed laser light caused by the RTW may be controlled by controlling a voltage of the RF voltage signal transmitted through the transmission line 124.

Since the power of the RTW is built up in the RTW transmitter 122 such that a high power may be output, the RTW may affect light propagation in the waveguide 110 in an efficient manner. This implies that the desired perturbation may be achieved in a short distance. Hence, the device 100 enables use of a short waveguide 110 in which the desired perturbation of the laser light and oppositely directed laser light is provided.

Thanks to having a short waveguide 110, optical losses in the waveguide 110 may be low. As the optical loss may be linearly dependent on length of the waveguide 110, a short waveguide 110 may ensure that optical losses are low.

The device 100 further comprises a differentiating element 150. The differentiating element 150 is configured to act selectively on the laser light and/or the second perturbation of oppositely directed laser light. Since the RTW is configured to provide different perturbations of laser light and oppositely directed laser light, the characteristics of laser light and oppositely directed laser light, respectively, may be changed such that laser light and oppositely directed laser light has different characteristics.

The differentiating element 150 may be configured to provide an effect of light that is dependent on the characteristics of light. Thus, the differentiating element 150 may provide different effects on laser light and on second perturbation of oppositely directed laser light. The differentiating element 150 may be configured to act only on light meeting a certain characteristic, such that the differentiating element 150 may selectively act on the laser light or on the second perturbation of oppositely directed laser light. However, the differentiating element 150 may alternatively act differently on light in dependence on the characteristics, such that the differentiating element 150 may selectively provide different effects on the laser light and the second perturbation of oppositely directed laser light.

The differentiating element 150 may comprise one or more optical components for providing the desired effect. For instance, the differentiating element 150 may comprise passive optical component(s).

The differentiating element 150 may for instance be configured to transmit, reflect, absorb, diffract, or divert light in dependence of characteristics. This may be used for controlling a path taken by the laser light and/or the second perturbation of oppositely directed laser light. Thus, the differentiating element 150 may be used for controlling a direction of light being guided by the device 100.

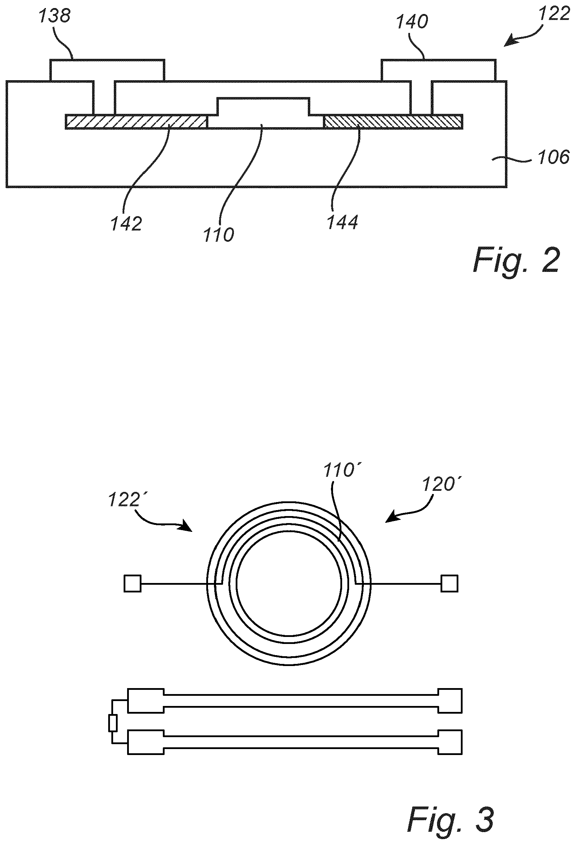

The waveguide 110 and the resonator 120 may be arranged in various relations to each other. The resonator 120 may be close to the waveguide 110 to ensure that the RTW may provide a strong effect on the waveguide 110. The resonator 120 and the waveguide 110 may be integrated on the substrate 106. As shown in Fig. 2, showing a cross-section of the device 100 along line C-C in Fig. 1, the structure of the resonator 120 in which the RTW is formed may be arranged in a layer above the waveguide 110.

The RTW transmitter 122 may comprise a ground line 138 and a signal line 140 extending in parallel. Thus, the RTW may be defined between the ground line 138 and the signal line 140. The waveguide 110 may be arranged between the ground line 138 and the signal line 140. In other words, the resonator 120 may comprise a first portion 138 and a second portion 140 for forming the RTW between the first portion 138 and the second portion 140. Further, the waveguide 110 may be arranged between the first and second portions 138, 140.

The waveguide 110 may be formed in a semiconductor material, such as silicon. The device 100 may further comprise doped regions connecting the waveguide 110 to the ground line 138 and the signal line, respectively. The ground line 138 may be connected via a negatively doped region 142 to the waveguide 110, while the signal line 140 may be connected via a positively doped region 144 to the waveguide 110. The waveguide 110 may be formed by intrinsic or undoped semiconductor.

The connection between the RTW transmitter 122 and the waveguide 110 may enhance an effect of the RTW on the waveguide 110. The signal traveling in the RTW transmitter 122 may cause a change of depletion width in the doped regions 142, 144 around the ground and signal lines 138, 140, respectively. This may cause a change of the refractive index of the waveguide 110.

It should be realized that the waveguide 110' may extend along a path that may have an arbitrary shape. As shown in Fig. 3, the waveguide 110' may according to an embodiment follow a curved path instead of the straight path shown in Fig. 1. The resonator 120' may comprise a circular shape of the RTW transmitter 122', such that the RTW transmitter 122' extends along the curved path of the waveguide 110'.

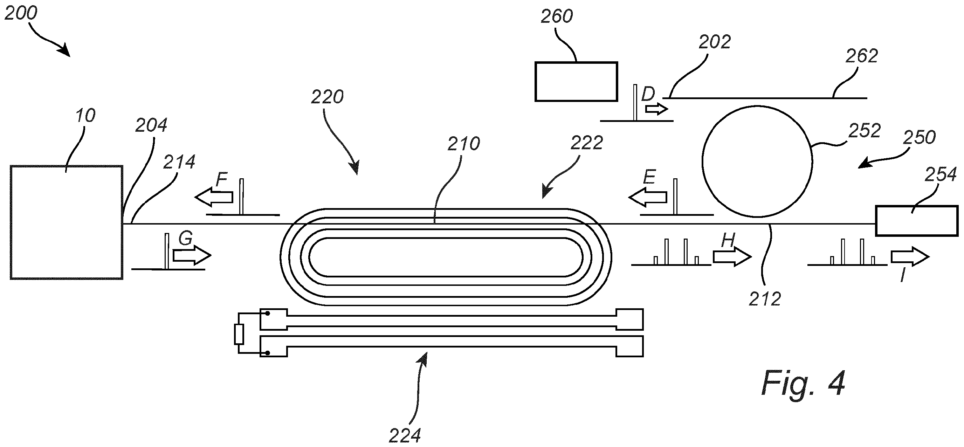

Referring now to Fig. 4, an embodiment of the device 200 being used as an optical isolator will be described. The optical isolator may for instance be used for providing output and guiding of laser light from a laser 260 while suppressing or preventing any back-reflections from reaching the laser 260. This may be advantageous in ensuring efficient output of laser light and providing a well-defined wavelength of the laser light.

The laser light from the laser 260 may be input into the device 200 at a first port 202 and may be propagating in an input waveguide 262. The wavelength content of the light input by the laser is indicated by a graph at arrow D, the middle of the horizontal line indicating the frequency of the laser light. The input waveguide 262 may transport the laser light past a coupling element 252 for coupling light between the input waveguide 262 and the first location 212 of the waveguide 210.

The coupling element 252 may for instance be formed by an optical add-drop multiplexer, which is wavelength selective to only provide coupling of a particular wavelength of light. The coupling element 252 may thus selectively couple light between the input waveguide 262 and the waveguide 210 in dependence of wavelength of light.

The waveguide 210 may be connected at the second location 214 to the second port 204 of the device 200. For instance, the device 200 may output the laser light from the waveguide 210 to an external photonic device 10, in which laser light is needed. The photonic device 10 may for instance be provided on a common substrate with the device 200.

The laser light may be subject to back-reflections, for instance, in interface between the device 200 and the photonic device 10 or in other parts of the photonic device 10. This back-reflected light may be input into the waveguide 210 at the second location 214 as oppositely directed laser light.

The waveguide 210 supports multiple modes of light such that the oppositely directed laser light may be propagated in the waveguide 210 even if the optical mode of the oppositely directed laser light is not equal to the optical mode of the laser light.

The device 200 comprises the resonator 220 which forms a RTW propagating along a direction of the waveguide 210. The resonator 220 is configured to provide the RTW in a RTW transmitter 222. The RTW transmitter 222 is fed by a transmission line 224 such that the RTW is configured to propagate along a direction of the waveguide 210 from the second location 214 towards the first location 212. Thus, the RTW is co-propagating with oppositely directed laser light and counter-propagating with laser light in the waveguide 210.

The RTW may be configured to modulate a phase of light propagating in the waveguide 210. Thus, the RTW may be configured to cause a first phase shift of the laser light propagating towards the second port 204 and a second phase shift of the oppositely directed laser light.

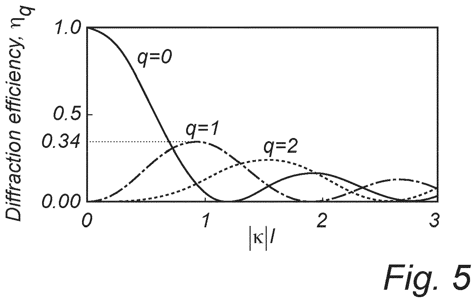

Referring now to Fig. 5, a modulation of efficiency provided by the RTW on the light propagating in the waveguide 210 may be defined by Bessel functions. The modulation efficiency may be defined as:

$$\eta_q = \frac{I_q(l)}{I_0(0)} = J_q^2(\kappa l),$$

where $\eta_q$ is a modulation efficiency of an order $q$, $I_q(l)$ is light intensity of the order $q$ at a distance $l$ along the waveguide 210 being affected by the RTW, $I_0(0)$ is light intensity at a starting location where RTW affects propagation of light in the waveguide 210, $J_q$ is the Bessel function of order $q$, and $\kappa$ is an overlap coefficient between the optical mode and the perturbation of the refractive index. The order of $q$ is given by a frequency shift of light based on the radio frequency $f_{RF}$ of the RTW, such that zeroth order ($q$=0) corresponds to no frequency shift, first order ($q$=1) corresponds to a frequency shift of $1*f_{RF}$, and so on.

As can be seen in Fig. 5, the zero order Bessel function has a value of zero, such that the second phase shift may be set to match the zero order Bessel function having a value of zero. Thus, perfect phase matching may be achieved between the RTW and the oppositely directed laser light such that the light intensity of the wavelength of laser light is completely quenched. This may be achieved for $J_0^2(0.765\pi) = 0$. Thus, by properly controlling the length of the phase shifter, i.e., a distance over which the RTW interacts with the oppositely directed laser light, and a voltage of the RTW, the zero order Bessel function for the second perturbation of the oppositely directed laser light may be zero.

The power of RTW may be high thanks to the enhancement of the RTW using the resonance condition in the resonator 220. This may imply that a length of the waveguide in which the RTW affects propagation of light may be short, while providing a large effect on light propagation. Thus, a length of the waveguide 210 may be short. This implies that optical loss of the device 200 may be small.

For instance, using a phase shifter based on Kerr effect optical loss in the waveguide 210 may be approximately 1 dB/cm. The length of the waveguide 210 may be as short as 3 mm, such that the device 200 may in total have a low optical loss of 0.3 dB.

The resonator 220 may be configured to cause a phase shift of the oppositely directed laser light such that the second perturbation of oppositely directed laser light at the first location 212 of the waveguide 210 does not comprise any intensity at the particular wavelength of the laser light. This implies that the second perturbation of back-reflected oppositely directed laser light will have a different wavelength from the laser light.

It should be further realized that since the device 200 is configured to provide different phase shifts for the laser light and the oppositely directed laser light, the laser light propagating from the first port 202 towards the second port 204 will not be quenched at the wavelength of the laser light input at the first port 202. Rather, the first phase shift may correspond to a full phase mismatch such that the first perturbation may correspond to a zero net effect on the laser light. This is indicated by graphs at arrows E and F in Fig. 4, wherein the wavelength content of the laser light before any perturbation by the RTW and the wavelength content of the first perturbation of the laser light is indicated.

The wavelength content of the oppositely directed laser light before any perturbation of the RTW is indicated at arrow G and the wavelength content of the second perturbation of the oppositely directed laser light is indicated at arrow H. Thanks to the second perturbation of the oppositely directed laser light having a different wavelength from the laser light, the second perturbation of the oppositely directed laser light will not be coupled by the coupling element 252 to the input waveguide 262.

Thus, the coupling element 252 may act selectively on the laser light and will not provide any coupling of the second perturbation of the oppositely directed laser light into the input waveguide 262. Hence, the coupling element 252 may form part of a differentiating element 250 providing differentiated action on the laser light and the second perturbation of the oppositely directed laser light.

The coupling element 252 may be seen as a filter for reducing intensity of light of wavelengths different from the particular wavelength of the laser light. The coupling element 252 may only pass a desired wavelength of light between the first port 202 and the waveguide 210. However, it should be realized that other filters may be alternatively used for controlling light to be selectively provided in a forward direction from the first port 202 towards the second port 204 but not allowing light to be passed back from the second port 204 to the first port.

Further, the device 200 may comprise a damper 254. The waveguide 210 may extend beyond the first location 212 such that the oppositely directed laser light which is not coupled by the coupling element 252 into the input waveguide 262 may continue to propagate in the waveguide 210, as indicated by arrow I. The waveguide 210 may thus be connected to a damper 254 in which the second perturbation of the oppositely directed laser light propagating past the first location 212 in the waveguide 210 is dampened.

Hence, as explained above, the device 200 may function as an optical isolator being directional and hence only providing light in one direction through the device 200.

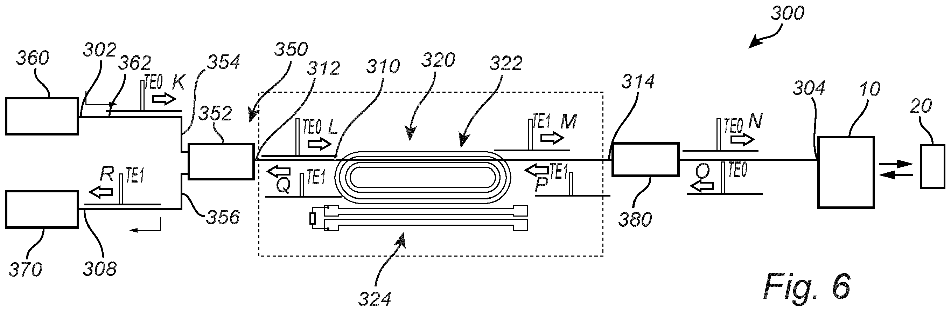

Referring now to Fig. 6, an embodiment of the device 300 being used as an optical circulator will be described. The optical circulator may for instance be used for providing output and guiding of laser light from a laser 360 towards a target 20 and for receiving light back from the target and guiding the received light to a detector 370. Thus, the optical circulator may be advantageously used for controlling direction of light from the laser 360 in a first direction and for controlling light received back to not be directed back to the laser 360 but instead into another direction for being detected.

The laser light from the laser 360 may be input into the device 300 at a first port 302 and may be propagating in an input waveguide 362. The laser light may be polarized having a zero order transverse electric mode (TE0) of propagation of the laser light, as indicated at arrow K. The input waveguide 362 may transport the laser light to a polarization splitter 352.

The polarization splitter 352 may be connected to a first end of the waveguide 310 at the first location 312 in the waveguide 310. The polarization splitter 352 may be arranged such that input laser light from the first end of the waveguide 310 into the polarization splitter 352 will be split into a first arm 354 or a second arm 356 based on polarization.

The polarization splitter 352 may receive the laser light having a first TED propagation mode from the first port 302 in the first arm 354 of the polarization splitter 352 associated with the corresponding polarization. This implies that the laser light will be transmitted by the polarization splitter 352 into the waveguide 310.

The waveguide 310 is configured to propagate the laser light from the first location 312 to the second location 314.

The device 300 comprises the resonator 320 which forms a RTW propagating along a direction of the waveguide 310. The resonator 320 is configured to provide the RTW in a RTW transmitter 322. The RTW transmitter 322 is fed by a transmission line 324 such that the RTW is configured to propagate along a direction of the waveguide 310 from the first location 312 towards the second location 314. Thus, the RTW is co-propagating with laser light and counter-propagating with oppositely directed laser light in the waveguide 310.

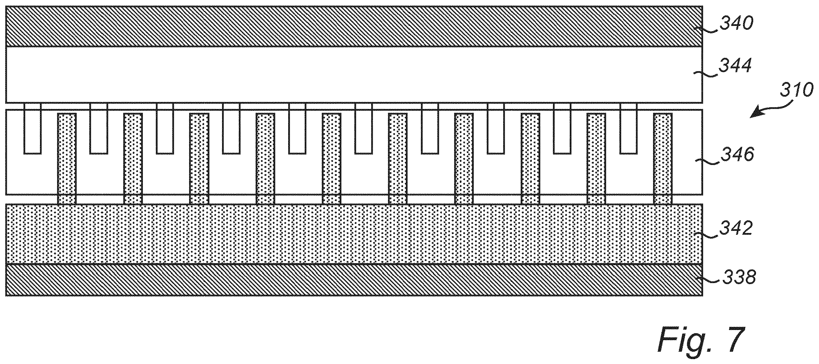

The RTW may be configured to modulate a propagation mode of light propagating in the waveguide 310. As shown in Fig. 7, the waveguide 310 may be formed from a semiconductor-based material being asymmetrically doped.

Fig. 7 illustrates doping of the semiconductor-based material in region S indicated in Fig. 6 along an extension of the waveguide 310 according to an embodiment. A core part 346 of the waveguide 310 may be formed by intrinsic or undoped semiconductor. The ground line 338 may be connected via a negatively doped region 342 to a lower part of the waveguide 310 such that the core part 346 extends above the negatively doped region 342. The negatively doped region 342 extends from the ground line 338 through an entire cross-section of the core part 346. The signal line 340 may be connected via a positively doped region 344 to a lower part of the waveguide 310 such that the core part 346 of the waveguide extends above the positively doped region 344. The positively doped region 344 may not extend through the entire cross-section of the core part 346 such that there is an asymmetry between the connection of the positively doped region 344 to the waveguide 310 and the connection of the negatively doped region 342 to the waveguide 310.

The connection between the signal line 340 and the waveguide 310 and the connection between the ground line 338 and the waveguide 310 are provided at different longitudinal positions along the extension of the waveguide 310 and the connections may be alternatingly provided along the extension of the waveguide 310.

The asymmetrical doping of the semiconductor-based material may imply that a perturbation of a refractive index of the waveguide 310 caused by the RTW may only affect part of a cross-section of the waveguide 310. Hence, there may be an overlap between the perturbation by the RTW and a higher order propagation mode, which may allow the first perturbation of the laser light by the RTW as the laser light propagates from the first location 312 towards the second location 314 to bring the laser light to a higher order propagation mode.

In particular, the device 300 may be configured to control modulation of the propagation mode such that the zero order transverse electric mode (TE0) of propagation of the laser light input at the first location 312, indicated at arrow L, is converted to a first order transverse electric mode (TE1) of propagation of the first perturbation of laser light at the second location 314 of the waveguide 310, indicated at arrow M.

The device 300 may further comprise a polarization converter 380. The polarization converter 380 may be connected to a second end of the waveguide 310 at the second location 314. The polarization converter 380 may be configured to change polarization of light such that TE1 light incident to the polarization converter 380 at the second end of the waveguide 310 is converted to TED light. Thus, the device 300 may be configured to output TED light at the second port 304 connected to the polarization converter 380, indicated at arrow N.

For instance, the device 300 may output the laser light at the second port 304 to an external photonic device 10. The external photonic device 10 may for instance be provided on a common substrate with the device 300. The external photonic device 10 may for instance function as an antenna for outputting light towards a target 20 and for capturing light provided back from the target 20. This may for instance be used for ranging applications wherein a distance to the target 20 is to be determined.

The device 300 may thus be configured to receive light back from the external photonic device 10 at the second port 304. The light received back may be TED light, i.e., light of the same polarization as is output by the external photonic device 10, indicated at arrow O. The light received back may be transmitted to the polarization converter 380. The polarization converter 380 may be reciprocal and hence the TED light may be converted to TE1 light at the second end of the waveguide 310, indicated at arrow P.

The RTW may cause a different modulation of the propagation mode of the oppositely directed laser light propagating from the second location 314 to the first location 312 compared to the modulation of the propagation mode of the laser light propagating from the first location 312 to the second location 314. Thus, the RTW may be configured to maintain the propagation mode of the oppositely directed laser light, such that the second perturbation of oppositely directed laser light at the first end of the waveguide 310 may be TE1 light, indicated at arrow Q.

This implies that the device 300 provides the second perturbation of oppositely directed laser light at the first end of the waveguide 310, such that the polarization of the second perturbation of oppositely directed laser light is different from the polarization of the laser light.

Hence, the polarization splitter 352 may act selectively on the second perturbation of oppositely directed laser light such that the second perturbation of oppositely directed laser light is not transmitted back into the direction from which the laser light was received. Hence, the coupling element 352 may form part of a differentiating element 350 providing differentiated action on the laser light and the second perturbation of the oppositely directed laser light.

The polarization splitter 352 may direct the second perturbation of oppositely directed laser light to the second arm 356. Thus, light received at the second port 304 is not guided by the device 300 back to the first port 302. On the contrary, the light received at the second port 304 may be guided to a third port 308, indicated at arrow R. Hence, the device 300 may form an optical circulator.

The light output at the third port 308 may for instance be provided to the detector 370, which may be used for detecting a response from the target 20 based on illumination provided by the laser light from the laser 360.

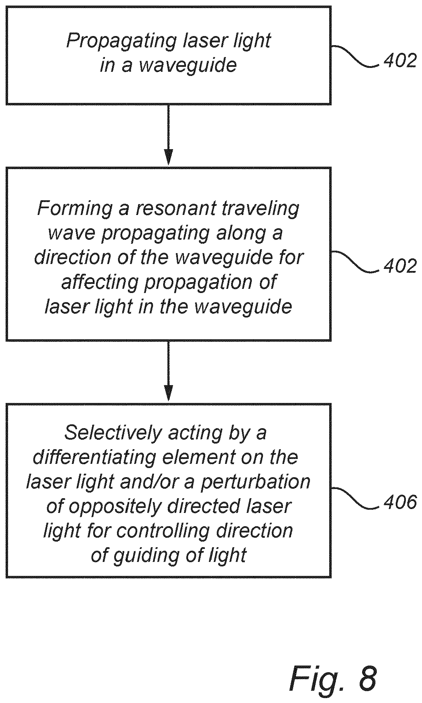

Referring now to Fig. 8, a method for guiding laser light will be described.

The method comprises propagating 402 the laser light between a first port and a second port in a waveguide. The waveguide may receive the laser light from the first port, possibly via one or more optical components. The waveguide may further propagate the laser light towards the second port, such that the laser light may be output at the second port, possibly via one or more optical components between the waveguide and the second port.

The method further comprises forming 404 a RTW propagating along a direction of the waveguide, wherein the RTW is configured to affect propagation of the laser light in the waveguide. The RTW may be configured to co-propagate with the laser light in the direction from the first port towards the second port. In such case, the RTW is configured to counter-propagate with oppositely directed laser light in the waveguide. However, the RTW may alternatively be configured to counter-propagate in relation to the laser light. In such case, the RTW is configured to co-propagate with oppositely directed laser light in the waveguide.

Since the RTW propagates in the direction of the waveguide, the RTW may provide different effects on the laser light and the oppositely directed laser light, respectively, in dependence on the RTW being co-propagating or counter-propagating with light in the waveguide. The RTW is thus configured to provide a first perturbation of the laser light propagating from the first port towards the second port and to provide a second perturbation of an oppositely directed laser light propagating from the second port towards the first port, wherein the first perturbation is different from the second perturbation.

The method further comprises selectively acting 406, by a differentiating element, on the laser light and/or the second perturbation of the oppositely directed laser light for controlling a direction of guiding of light.

For instance, the method may provide a phase shift of the oppositely directed laser light that is adapted such that intensity of a wavelength of the oppositely directed laser light corresponding to the wavelength of the laser light is quenched. Hence, the second perturbation of the oppositely directed laser light may be frequency shifted based on harmonics of a radio frequency of the RTW. This may be used for preventing, by the differentiating element, the second perturbation of the oppositely directed laser light to be coupled back to the first port. Thus, the method may provide a function of an optical isolator in that propagation of light is provided exclusively in a direction from the first port to the second port and not in the reverse direction. This may be used for preventing back-reflections to be provided back into a laser.

In another embodiment, the method may comprise guiding of the laser light from the first port to the second port and guiding of the oppositely directed laser light from the second port to a third port, different from the first port. Thus, the method may provide a function of an optical circulator.

The method may use the RTW for selectively changing propagation mode of the laser light, while maintaining the propagation mode of the oppositely directed laser light. This may be used in combination with a polarization splitter to ensure that laser light received from the first port is transferred to the waveguide, while the second perturbation of the oppositely directed laser light in the waveguide is transferred by the polarization splitter to the third port.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A device (100; 200; 300) for guiding laser light, said device (100; 200; 300) comprising:

    a waveguide (110; 210; 310) configured to propagate the laser light between a first port (102; 202; 302) and a second port (104; 204; 304);
    a resonator (120; 220; 320) configured to form a resonant traveling wave, RTW, to be propagated along a direction of the waveguide (110; 210; 310), wherein the RTW is configured to affect propagation of the laser light in the waveguide (110; 210; 310), wherein the resonator (120; 220; 320) is configured to provide a first perturbation of the laser light propagating from the first port (102; 202; 302) towards the second port (104; 204; 304) and to provide a second perturbation of oppositely directed laser light propagating from the second port (104; 204; 304) towards the first port (102; 202; 302), wherein the first perturbation is different from the second perturbation; and
    a differentiating element (150; 250; 350) configured to act selectively on the laser light and/or the second perturbation of the oppositely directed laser light such that the device (100; 200; 300) is configured to control a direction of light being guided by the device (100; 200; 300).

2. The device according to claim 1, wherein the RTW is configured to cause a first phase shift of the laser light propagating from the first port (202) towards the second port (204) and a second phase shift of the oppositely directed laser light.

3. The device according to claim 2, wherein the device (200) is configured to control the second phase shift of the oppositely directed laser light to match a zero order Bessel function having a value of zero.

4. The device according to any one of claims 2-3, wherein the differentiating element (250) comprises a filter (252) for reducing intensity of light of wavelengths different from a particular wavelength of the laser light.

5. The device according to claim 1, wherein the RTW is configured to affect a propagation mode of the laser light in the waveguide (310).

6. The device according to claim 5, wherein the RTW is configured to change the propagation mode of the laser light from a first propagation mode at a first location (302) to a second propagation mode at a second location (214) and wherein the RTW is configured to maintain a second propagation mode of the oppositely directed laser light at the second location (214) during guiding of the oppositely directed laser light towards the first location (212).

7. The device according to claim 6, wherein the RTW is configured to cause a perturbation of a refractive index of the waveguide (310) such that the laser light changes from the first propagation mode to a higher order propagation mode.

8. The device according to any one of claims 5-7, wherein the differentiating element (350) comprises a polarization splitter (352), which is configured to control a direction of output of an input laser light in dependence of a propagation mode of the input laser light.

9. The device according to any one of the preceding claims, wherein the resonator (120; 220; 320) is a radio frequency resonator configured to form the RTW with a radio frequency, wherein the radio frequency resonator is configured to provide electro-optic perturbation of the laser light propagating in the waveguide (110; 210; 310).

10. The device according to claim 9, wherein the RTW is configured to change a refractive index of the waveguide (110; 210; 310).

11. The device according to any one of claims 9-10, wherein the radio frequency resonator (120; 220; 320) comprises a resonant traveling wave transmitter (122; 222; 322), wherein the resonant traveling wave transmitter (122; 222; 322) is configured to form a loop, and a transmission line (124; 224; 324) arranged in relation to the resonant traveling wave transmitter (122; 222; 322) for coupling a signal into the resonant traveling wave transmitter (122; 222; 322).

12. The device according to claim 11, wherein the device is configured to control perturbation of the laser light in the waveguide (110; 210; 310) by controlling a voltage of a control signal transmitted through the transmission line (124; 224; 324).

13. The device according to any one of the preceding claims, wherein the resonator (120; 220; 320) comprises a first portion (138) and a second portion (140) for forming the RTW between the first portion (138) and the second portion (140), wherein the waveguide (110; 210; 310) is arranged between the first and second portions (138, 140).

14. The device according to any one of the preceding claims, wherein at least the waveguide (110; 210; 310) and the resonator (120; 220; 320) are integrated on a common substrate (106).

15. A method for guiding laser light, said method comprising:

propagating (402) the laser light between a first port and a second port in a waveguide; forming (404) a resonant traveling wave, RTW, propagating along a direction of the waveguide, wherein the RTW is configured to affect propagation of the laser light in the waveguide, wherein the RTW is configured to provide a first perturbation of the laser light propagating from the first port towards the second port and to provide a second perturbation of an oppositely directed laser light propagating from the second port towards the first port, wherein the first perturbation is different from the second perturbation; and selectively acting (406), by a differentiating element, on the laser light and/or the second perturbation of the oppositely directed laser light for controlling a direction of guiding of light.

Fig. 1

*Fig. 2*

*Fig. 3*

Fig. 4

*Fig. 5*

*Fig. 6*

Fig. 7

Propagating laser light
in a waveguide

*402*

Forming a resonant traveling
wave propagating along a
direction of the waveguide for
affecting propagation of
laser light in the waveguide

*402*

Selectively acting by a
differentiating element on the
laser light and/or a perturbation
of oppositely directed laser
light for controlling direction
of guiding of light

*406*

*Fig. 8*

# EUROPEAN SEARCH REPORT

**Application Number**

EP 24 17 6052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/129276 A1 (DEL BINO LEONARDO [GB] ET AL) 2 May 2019 (2019-05-02)<br>* figures 1, 2 *<br>* paragraphs [0006], [0042] - [0046], [0057] - [0059], [0071], [0090] * | 1-15 | INV.<br>G02F1/225<br>G02F1/035<br>G02F1/35 |
| A | JP 6 062618 B2 (NITTOH KOGAKU KK; KOIKE YASUHIRO) 18 January 2017 (2017-01-18)<br>* paragraph [0025] * | 1,3,15 | |
| A | US 2019/280461 A1 (MENEZO SYLVIE [FR] ET AL) 12 September 2019 (2019-09-12)<br>* paragraph [0027] * | 1,2,5,10 | |
| A | US 2023/358939 A1 (DEL'HAYE PASCAL [DE] ET AL) 9 November 2023 (2023-11-09)<br>* paragraph [0025] - paragraph [0026] *<br>* paragraph [0046] - paragraph [0047] *<br>* paragraph [0054] - paragraph [0055] *<br>* paragraph [0059] *<br>* paragraph [0061] *<br>* paragraph [0066] * | 1,15 | |
| A | US 9 810 964 B2 (LEICA GEOSYSTEMS AG [CH]) 7 November 2017 (2017-11-07)<br>* figure 1 * | 1,15 | TECHNICAL FIELDS SEARCHED (IPC)<br><br>G02F |
| A | US 2015/049377 A1 (ZHELUDEV NIKOLAY IVANOVICH [GB] ET AL) 19 February 2015 (2015-02-19)<br>* figures 1a-1b * | 1,15 | |

The present search report has been drawn up for all claims

| Place of search | Date of completion of the search | Examiner |
|---|---|---|
| The Hague | 8 October 2024 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6052

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | | | Publication date | Patent family member(s) | | Publication date |
|---|---|---|---|---|---|---|
| US 2019129276 | A1 | | 02-05-2019 | CN 109791341 A | | 21-05-2019 |
| | | | | EP 3475758 A1 | | 01-05-2019 |
| | | | | JP 7063826 B2 | | 09-05-2022 |
| | | | | JP 2019522817 A | | 15-08-2019 |
| | | | | KR 20190020126 A | | 27-02-2019 |
| | | | | US 2019129276 A1 | | 02-05-2019 |
| | | | | WO 2017221028 A1 | | 28-12-2017 |
| JP 6062618 | B2 | | 18-01-2017 | JP 6062618 B2 | | 18-01-2017 |
| | | | | JP 2012186081 A | | 27-09-2012 |
| US 2019280461 | A1 | | 12-09-2019 | CA 3036322 A1 | | 12-09-2019 |
| | | | | CN 110265866 A | | 20-09-2019 |
| | | | | EP 3540878 A1 | | 18-09-2019 |
| | | | | FR 3078835 A1 | | 13-09-2019 |
| | | | | JP 7334045 B2 | | 28-08-2023 |
| | | | | JP 2019161229 A | | 19-09-2019 |
| | | | | US 2019280461 A1 | | 12-09-2019 |
| US 2023358939 | A1 | | 09-11-2023 | CN 116868110 A | | 10-10-2023 |
| | | | | EP 4285183 A1 | | 06-12-2023 |
| | | | | US 2023358939 A1 | | 09-11-2023 |
| | | | | WO 2022161611 A1 | | 04-08-2022 |
| US 9810964 | B2 | | 07-11-2017 | CN 104246584 A | | 24-12-2014 |
| | | | | EP 2653908 A1 | | 23-10-2013 |
| | | | | EP 2839334 A1 | | 25-02-2015 |
| | | | | JP 6297024 B2 | | 20-03-2018 |
| | | | | JP 2015519598 A | | 09-07-2015 |
| | | | | US 2015070709 A1 | | 12-03-2015 |
| | | | | WO 2013155636 A1 | | 24-10-2013 |
| US 2015049377 | A1 | | 19-02-2015 | US 2015049377 A1 | | 19-02-2015 |
| | | | | WO 2013144559 A1 | | 03-10-2013 |

EPO FORM P0459

For more details about this annex : see Official Journal of the European Patent Office, No. 12/82